# EUROPEAN PATENT APPLICATION

(11) **EP 3 249 884 A1**
(43) Date of publication of application: **29.11.2017**
(21) Application number: 16170992.8
(22) Date of filing: 24.05.2016
(51) Int. Cl.: H04L 29/08, H02J 3/38

(54) **COMMUNICATION METHOD FOR ELECTRICAL NETWORK AND ELECTRICAL NETWORK UTILIZING SAID METHOD**

(71) Applicant: ABB Schweiz AG, 5400 Baden (CH)
(72) Inventor: KOKKONEN, Jesse, 00380 Helsinki (FI)
(74) Representative: Kolster Oy Ab

(57) **Abstract**

A communication method for an electrical network comprising at least one first type node (N11, N12), a plurality of second type nodes (N21 - N210), and a network system (NS) electrically connecting the at least one first type node (N11, N12) and the plurality of second type nodes (N21 - N210). The method comprises sending information from the at least one first type node (N11, N12) to the plurality of second type nodes (N21 - N210) through the network system (NS). Each of the second type nodes (N21 - N210) has a unique code identifying the second type node, and individual information is sent from the at least one first type node (N11, N12) to the second type nodes (N21 - N210) by using the unique codes of the second type nodes (N21 - N210) as addresses.

## Description

### FIELD OF THE INVENTION

The present invention relates to transferring information between nodes of an electrical network.

A use of an electrical network as a communication channel is known for example from publication US 7 304 403 B2.

### BRIEF DESCRIPTION OF THE INVENTION

An object of the present invention is to provide a new type of communication method for an electrical network, and an electrical network for implementing the method. The objects of the invention are achieved by a method and an electrical network which are characterized by what is stated in the independent claims. Preferred embodiments of the invention are disclosed in the dependent claims.

The invention is based on the idea of providing nodes of an electrical network with unique codes identifying the nodes, and transferring information between the nodes by utilizing said unique codes as addresses.

An advantage of the invention is that individual and versatile information can be transferred between nodes of an electrical network through a network system electrically connecting the nodes. The unique codes enable, for example, individual control of decentralized power plants by a grid operator node.

### BRIEF DESCRIPTION OF THE DRAWING

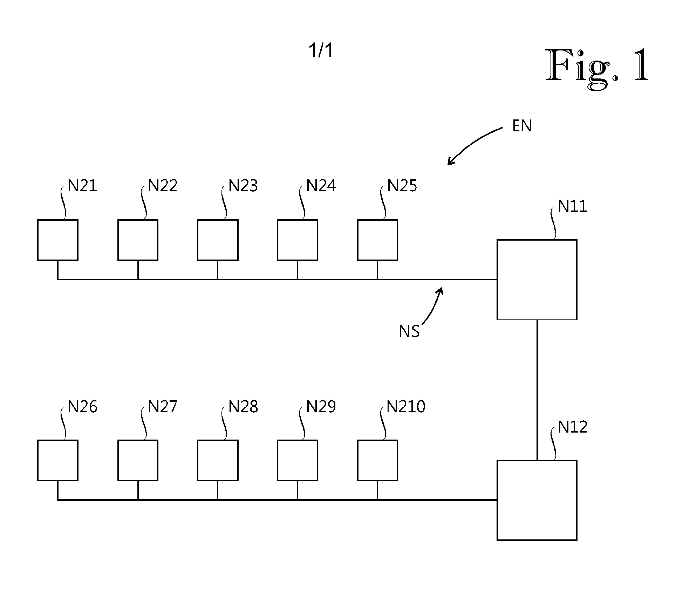

In the following the invention will be described in greater detail by means of preferred embodiments with reference to the attached Figure 1 which shows an electrical network according to an embodiment of the invention.

### DETAILED DESCRIPTION OF THE INVENTION

Figure 1 shows an electrical network EN comprising first type nodes N11 and N12, second type nodes N21 - N210, and a network system NS electrically connecting the first type nodes and the second type nodes N21 - N210 together. Herein, an electrical connection between nodes means a connection adapted for transferring electricity between the nodes. Each of the first type nodes N11 and N12 has a unique code identifying the first type node. Each of the second type nodes N21 - N210 has a unique code identifying the second type node. Each of the first type nodes N11 and N12 is adapted to send individual information to the second type nodes N21 - N210 by using the unique codes of the second type nodes as addresses. Each of the second type nodes N21 - N210 is adapted to send information to at least one first type node by using the unique code of the at least one first type node as an address. The first type nodes and second type nodes of the electrical network EN are adapted to send and receive information through a communication channel comprising the network system NS. The network system NS comprises transformers and power lines. The unique codes of the nodes function as addresses identifying the correct recipient for information.

The nodes of the electrical network EN are adapted to send information at such a frequency that it does not interfere with any other functionalities in the electrical network EN. The signal carrying the information is selected such that it can be detected from long distance without distortion. The signal can be analogue or digital. The signal is preferably injected to the power lines. In alternative embodiments, the signal carrying the information is injected to transformers or other components of the network system.

Each of the first type nodes N11 and N12 is a grid operator node adapted to control the second type nodes N21 - N210 individually by means of the individual information. For example, the first type node N11 can control second type node N29 without controlling other nodes.

Each of the second type nodes N21 - N210 includes a decentralized power plant. Each of the decentralized power plants comprises a solar power plant or a wind power plant. Each of the first type nodes N11 and N12 is adapted to control the second type nodes N21 - N210 by individual control commands, which are adapted to control generation of electricity of the second type nodes N21 - N210. The individual control commands include commands adapted to control power, frequency and voltage of the second type nodes N21 - N210. Reactive power and active power are controlled separately by using reactive power control commands and active power control commands. For example, the first type node N12 can control the second type node N210 to increase generation of reactive power and to control the second type node N26 to decrease generation of reactive power with individual reactive power control commands.

Each of the second type nodes N21 - N210 is adapted to send information to at least one second type node other than itself through the communication channel utilizing the unique codes of the second type nodes. Consequently, the decentralized power plants are adapted to communicate with each other via the power lines.

The information the first type nodes N11 and N12 are adapted to send to the second type nodes N21 - N210 includes grid state information which relates to an operational status of the electrical network EN. The grid state information includes selectively a first type message informing that the electrical network operates without problems, or a second type message informing that a problem exists in the electrical network. Each of the second type nodes N21 - N210 is adapted to disconnect itself from the rest of the electrical network when an islanding situation is present based on the grid state information.

In an alternative embodiment, a second type node is adapted to switch off itself in connection with disconnecting itself from the rest of the electrical network. The switch-off can be necessary in situations where the second type node does not have, after said disconnection from the rest of the electrical network, a load into which it could feed electricity it generates. Herein, switching off a second type node means that the second type node discontinues generating electric power.

In an alternative embodiment, grid state information the first type nodes are adapted to send includes a presence signal adapted to inform a recipient that the recipient is electrically connected to the signal sending first type node through the network system. A potential islanding situation is present when the recipient node receives no presence signal from a first type node from which the recipient node normally receives presence signals. In a further alternative embodiment, a second type node is adapted to monitor presence signals of several first type nodes, and to detect an islanding condition if any one of the presence signals is missing. When an islanding condition is detected, the second type node discontinues feeding power to the electrical network.

The unique code of each of the second type nodes N21 - N210 includes information relating to a geographical location of the second type node and to an owner of the second type node. This enables selective controlling of second type nodes located in a certain region, or selective controlling of second type nodes located in a certain region and owned by a certain grid operator.

The electrical network EN comprises a first node group and a second node group. The first node group comprises second type nodes N21, N22 and N23. The second node group comprises second type nodes N27, N28, N29 and N210. Each of the node groups has a unique group code identifying the node group. The first type nodes N11 and N12 are adapted to control the node groups individually by using the unique group codes thereof as addresses. For example, the first type node N11 can control the first node group to increase power generation and to control the second node group to decrease power generation. All nodes of a node group can be controlled with a single control command.

The first node group comprises second type nodes located in a certain geographical area. The second node group comprises second type nodes located in a different geographical area.

In the electrical network EN of Figure 1 both first type nodes and second type nodes are adapted to send and receive information. In an alternative embodiment, an electrical network comprises a plurality of second type nodes which are only adapted to receive information from at least one first type node. In a further alternative embodiment, an electrical network comprises only one first type node which does not have to have a unique code. In a yet further alternative embodiment, an electrical network comprises a plurality of first type nodes none of which has a unique code. However, in embodiments where it is necessary to identify the first type node which is sending information, or information is sent to a specific first type node, it is practical to provide each first type node with a unique code identifying the first type node.

It will be obvious to a person skilled in the art that the inventive concept can be implemented in various ways. The invention and its embodiments are not limited to the examples described above but may vary within the scope of the claims.

## Claims

1. A communication method for an electrical network comprising at least one first type node (N11, N12), a plurality of second type nodes (N21 - N210), and a network system (NS) electrically connecting the at least one first type node (N11, N12) and the plurality of second type nodes (N21 - N210),
the method comprising sending information from the at least one first type node (N11, N12) to the plurality of second type nodes (N21 - N210) through the network system (NS),
**characterized in that** each of the second type nodes (N21 - N210) has a unique code identifying the second type node, and individual information is sent from the at least one first type node (N11, N12) to the second type nodes (N21 - N210) by using the unique codes of the second type nodes (N21 - N210) as addresses.

2. A method according to claim 1, **characterized in that** each of the plurality of second type nodes (N21 - N210) includes a decentralized power plant, and said sending of information from the at least one first type node (N11, N12) to the plurality of second type nodes (N21 - N210) comprises controlling each of the second type nodes (N21 - N210) by individual control commands, which are adapted to control generation of electricity of the second type nodes (N21 - N210).

3. An electrical network comprising:
at least one first type node (N11, N12);
a plurality of second type nodes (N21 - N210), the at least one first type node (N11, N12) being adapted to send information to the plurality of second type nodes (N21 - N210) through a communication channel; and
a network system (NS) electrically connecting the at least one first type node (N11, N12) and the plurality of second type nodes (N21 - N210), the communication channel comprising the network system (NS),
**characterized in that** each of the second type nodes (N21 - N210) has a unique code identifying the second type node, and the at least one first type node (N11, N12) is adapted to send individual information to the second type nodes (N21 - N210) by using the unique codes of the second type nodes (N21 - N210) as addresses.

4. An electrical network according to claim 3, **characterized in that** the at least one first type node (N11, N12) is adapted to control each of the second type nodes (N21 - N210) individually by means of the individual information.

5. An electrical network according to claim 4, **characterized in that** each of the plurality of second type nodes (N21 - N210) includes a decentralized power plant, and the at least one first type node (N11, N12) is adapted to control each of the second type nodes (N21 - N210) by individual control commands, which are adapted to control generation of electricity of the second type nodes (N21 - N210).

6. An electrical network according to claim 5, **characterized in that** the individual control commands include commands adapted to control at least one of the following quantities of the generation of electricity of the second type nodes (N21 - N210): power, frequency, voltage.

7. An electrical network according to any one of claims 3 to 6, **characterized in that** each of the second type nodes (N21 - N210) is adapted to send information to the at least one first type node (N11, N12) through the communication channel.

8. An electrical network according to claim 7, **characterized in that** the electrical network (EN) comprises a plurality of first type nodes (N11, N12), each of which has a unique code identifying the first type node (N11, N12), and each of the second type nodes (N21 - N210) is adapted to send information to at least one first type node (N11, N12) through the communication channel by utilizing the unique code of the at least one first type node (N11, N12) as an address.

9. An electrical network according to any one of claims 3 to 8, **characterized in that** each of the second type nodes (N21) is adapted to send information to at least one second type node (N210) other than itself through the communication channel by utilizing the unique codes of the second type nodes (N21 - N210) as addresses.

10. An electrical network according to any one of claims 3 to 9, **characterized in that** the information the at least one first type node (N11, N12) is adapted to send to the second type nodes (N21 - N210) includes grid state information which relates to an operational status of the electrical network (EN).

11. An electrical network according to claim 10, **characterized in that** the grid state information includes selectively a first type message informing that the electrical network (EN) operates without problems, or a second type message informing that a problem exists in the electrical network (EN).

12. An electrical network according to claim 10 or 11, **characterized in that** each of the plurality of second type nodes (N21 - N210) includes a decentralized power plant which is adapted to disconnect itself from the rest of the electrical network (EN) when an islanding situation is present based on the grid state information.

13. An electrical network according to any one of claims 3 to 12, **characterized in that** the unique code of each of the second type nodes (N21) includes information relating to a geographical location of the second type node (N21) and/or to an owner of the second type node (N21).

14. An electrical network according to any one of claims 3 to 13, **characterized in that** the electrical network (EN) comprises at least one node group comprising a number of second type nodes (N21 - N210), each of the at least one node group has a unique group code identifying the node group, and the at least one first type node (N11, N12) is adapted to control the at least one node group individually by using the unique group code of the at least one node group as an address.

15. An electrical network according to claim 14, **characterized in that** the at least one node group consists of second type nodes (N21 - N210) which are located in the same geographical area.
